# FASCICULE DE BREVET EUROPEEN

(11) **EP 0 883 135 B1**
(45) Date de publication et mention de la délivrance du brevet: **19.03.2003**
(21) Numéro de dépôt: 98401340.9
(22) Date de dépôt: 03.06.1998
(51) Int. Cl.: G21C 19/07, G21C 19/40

(54) **Râtelier de stockage d'assemblages de combustible nucléaire et son procédé de fabrication**
Lagergestell für Kernreaktorbrennstabbündel und Verfahren zur Herstellung desselben
Storage rack for nuclear fuel assemblies and method of fabrication

(30) Priorité: 05.06.1997 FR 9706984
(43) Date de publication de la demande: 09.12.1998
(73) Titulaire: ATEA INDUSTRIES, 44470 Nantes Carquefou Cedex (FR)
(72) Inventeur: Robert, Jean, 44240 la Chapelle sur Erdre (FR); Kopecky, Berndard, 44300 Nantes (FR)
(74) Mandataire: Laurent, Michel

(56) Documents cités:
- WO-A-92/22910
- FR-A- 2 680 909
- JP-A- 5 080 188
- JP-A- 5 080 189
- JP-A- 8 062 379

## Description

### Domaine technique

L'invention concerne un râtelier de stockage d'assemblages de combustible nucléaire neufs ou précédemment irradiés dans un réacteur nucléaire.

Dans l'ensemble du texte, l'expression "râtelier de stockage" désigne une structure de forme et de dimensions quelconques, fixe ou mobile, apte à recevoir un nombre quelconque d'assemblages de combustible nucléaire neufs ou irradiés.

Dans l'industrie nucléaire, les assemblages de combustible nucléaire, qui constituent la source d'énergie des centrales nucléaire, doivent fréquemment être stockés.

Un tel stockage concerne aussi bien les assemblages neufs que ceux qui ont été irradiés plus ou moins longtemps dans un réacteur nucléaire. Ainsi, les assemblages neufs peuvent être stockés sur leur site de fabrication ainsi que dans les centrales nucléaires. Le stockage des assemblages irradiés peut intervenir également sur le site des centrales nucléaires ainsi qu'en des emplacements éloignés de celles-ci tels que des sites de retraitement.

### Etat de la technique

Lorsque les assemblages de combustible nucléaire doivent être stockés, ils sont placés dans des râteliers de stockage immergés dans des piscines. Plus précisément, un râtelier de stockage peut généralement recevoir plusieurs dizaines d'assemblages de combustible nucléaire, chaque assemblage étant reçu dans un logement vertical séparé, de section sensiblement carrée. Un ou plusieurs râteliers peuvent être placés dans une même piscine et le nombre des logements est variable suivant les dimensions des râteliers, de même que la forme extérieure de ces derniers.

La conception des râteliers de stockage d'assemblages de combustible nucléaire doit prendre en compte un certain nombre d'exigences, dont certaines sont contradictoires. Parmi ces exigences, on citera la compacité (stockage d'un nombre d'assemblages aussi élevé que possible dans un volume donné), le respect des impératifs de criticité, la facilité de fabrication et le coût.

Dans le document FR-A-2 680 909, on a proposé un râtelier de stockage d'assemblages de combustible nucléaire qui satisfait à l'ensemble de ces conditions. Ce râtelier est obtenu en reliant en quinconce des tubes de section sensiblement carrée, au moyen de pattes de liaison soudées sur les faces extérieures de ces tubes. Pour satisfaire aux impératifs de criticité, notamment lorsque les assemblages reçus dans le râtelier sont neufs ou peu irradiés, des plaques planes en un matériau neutrophage sont mises en place dans les espaces libres séparant les tubes, au fur et à mesure de l'assemblage de ces derniers. L'expression "matériau neutrophage" désigne un matériau tel que de l'acier inoxydable boré, ayant un pouvoir d'absorption vis-à-vis des neutrons.

Dans le document EP-A-0 858 079 correspondant à la demande de brevet français n°97 01487 du 10 FEVRIER 1997, on a proposé un perfectionnement au râtelier de stockage décrit dans le document FR-A-2 680 909. Dans ce cas, les plaques indépendantes en matériau neutrophage sont remplacées par des ensembles neutrophages, de section sensiblement carrée. Chacun de ces ensembles est formé de quatre plaques planes en matériau neutrophage, encerclées par au moins deux systèmes de maintien. Ces ensembles neutrophages peuvent être mis en place à tout moment après l'assemblage des tubes formant le râtelier.

Comme on l'a déjà observé, ce type de râtelier de stockage satisfait aux principales conditions imposées à une telle structure. Cependant, la facilité de fabrication de la structure découle de l'utilisation de tubes de section sensiblement carrée et de pattes de liaison soudées sur ces tubes. Le recours à des tubes relativement coûteux tend à accroître le coût du râtelier. De plus, du fait que les logements sont formés alternativement à l'intérieur d'un tube et entre quatre tubes voisins, des différences dimensionnelles et géométriques notables peuvent apparaître entre les logements, compte tenu des tolérances de fabrication.

### Exposé de l'invention

L'invention a précisément pour objet un râtelier de stockage d'assemblages de combustible nucléaire dont la conception originale lui permet de satisfaire à toutes les contraintes imposées à une telle structure, en réduisant le coût de fabrication et en améliorant la régularité du dimensionnement et de la géométrie des logements par rapport au râtelier décrit dans le document FR-A-2 680 908.

Conformément à l'invention, ce résultat est obtenu au moyen d'un râtelier de stockage d'assemblages de combustible nucléaire, comprenant une structure délimitant des logements juxtaposés, de section sensiblement carrée, agencés selon un réseau régulier, ladite structure comportant :
- des tôles principales, disposées parallèlement les unes aux autres selon un pas constant,
- des tôles entretoises fixées entre les tôles principales voisines et parallèlement les unes aux autres selon ledit pas constant, de façon à être perpendiculaires aux tôles principales et alignées de part et d'autre de celles-ci, et
- une plaque de base fixée au moins à certaines des tôles principales et des tôles entretoises, perpendiculairement à ces tôles et
des dents et des saillies, respectivement formées sur les deux bords opposés, de plus grande longueur, des tôles entretoises, qui sont reçues dans des encoches découpées dans les tôles principales et sont pourvues de rainures aptes à emprisonner certaines parties des tôles principales situées entre deux encoches consécutives, de telle sorte que les tôles principales et les tôles entretoises sont fixées les unes aux autres par emboîtements mécaniques.

De préférence, deux tôles de fermeture sont fixées aux tôles principales parallèlement aux tôles entretoises et de part et d'autre de celles-ci, selon ledit pas constant.

La structure du râtelier forme habituellement un parallélépipède rectangle de hauteur et de côtés donnés. Dans ce cas, chacune des tôles principales a la forme d'un rectangle dont les dimensions sont la hauteur et l'un des côtés du parallélépipède, chacune des tôles entretoises a la forme d'un rectangle dont les dimensions sont la hauteur et le pas constant qui sépare les tôles principales, et la plaque de base a la forme d'un rectangle dont les dimensions sont les deux côtés du parallélépipède.

Dans la forme de réalisation préférée de l'invention, les tôles principales, les tôles entretoises, les tôles de fermeture et la plaque de base sont toutes sensiblement planes.

Afin de satisfaire aux contraintes de criticité, généralement au moins deux plaques d'un matériau neutrophage sont placées dans chacun des logements de la structure, parallèlement à une tôle principale et à une tôle entretoise, de telle sorte qu'au moins une plaque de matériau neutrophage sépare chaque paire de logements voisins de la structure. Le nombre et la répartition des plaques peuvent être différents suivant les contraintes de criticité, le nombre des plaques pouvant, dans certains cas, être inférieur à deux dans chacun des logements.

Lorsque le râtelier est destiné à recevoir des assemblages neufs ou faiblement irradiés, quatre plaques de matériau neutrophage sont placées dans au moins certains des logements.

Avantageusement, les quatre plaques de matériau neutrophage reçues dans un même logement sont reliées les unes aux autres par des systèmes de maintien, de façon à former des ensembles amovibles comparables à ceux qui sont décrits dans le document EP-A- 0 858 079.

Dans ce dernier cas, les tôles principales et les tôles entretoises comportent des plis rectilignes, dans le sens de la hauteur de la structure, de telle sorte que les sections de tous les logements soient sensiblement identiques lorsqu'un ensemble neutrophage amovible est placé dans un logement sur deux.

L'invention a également pour objet un procédé de fabrication d'un tel râtelier de stockage. Selon ce procédé :
- on dispose sur un outillage une première tôle principale,
- on positionne et on fixe à tour de rôle une première rangée de tôles entretoises sur la première tôle principale,
- on dispose une deuxième tôle principale parallèlement à la première et on la fixe sur la première rangée de tôles entretoises, et
- on répète les deux opérations précédentes afin de monter toutes les tôles entretoises et toutes les tôles principales,
les fixations des tôles principales et des entretoises étant réalisées par emboîtements mécaniques, en emprisonnant certaines parties des tôles principales, situées entre des encoches consécutives formées dans celles-ci, dans des rainures prévues dans des dents et des saillies, respectivement formées sur deux bords opposés, de plus grande longueur, des tôles entretoises.

### Brève description des dessins

On décrira à présent, à titre d'exemples non limitatifs, deux formes de réalisation préférées de l'invention, en se référant aux dessins annexés, dans lesquels :
- la figure 1 est une vue en perspective éclatée qui représente une partie d'un râtelier de stockage selon une première forme de réalisation de l'invention, en cours de montage ;
- la figure 2 est une vue de dessus représentant schématiquement une partie du râtelier de la figure 1, dans laquelle deux plaques de matériau neutrophage ont été placées dans chacun des logements ;
- la figure 3 est une vue de dessus comparable à la figure 2, représentant une partie du râtelier de la figure 1 dans laquelle des ensembles amovibles comprenant chacun quatre plaques de matériau neutrophage ont été placés dans chacun des logements ;
- la figure 4 est une vue en perspective qui représente une partie d'un râtelier de stockage selon une deuxième forme de réalisation de l'invention, en cours de montage ; et
- la figure 5 est une vue de dessus du râtelier de la figure 4 dans lequel des plaques de matériau neutrophage ont été placées dans un logement sur deux.

### Exposé détaillé d'une forme de réalisation préférée

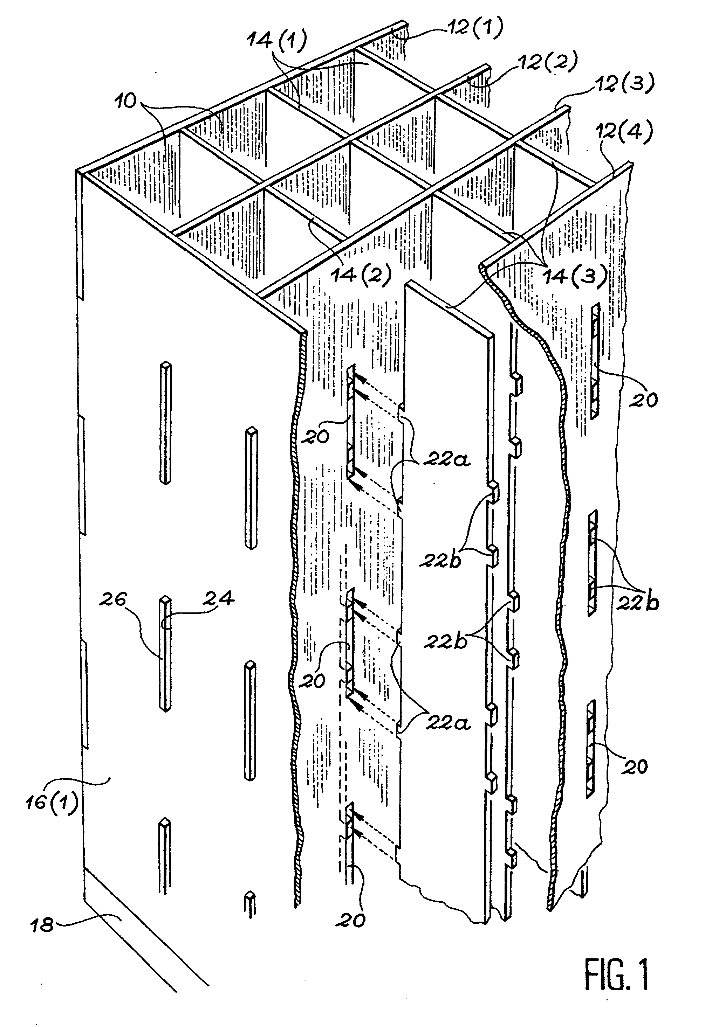

La figure 1 représente, en perspective, une partie d'un râtelier de stockage d'assemblages de combustible nucléaire selon une première forme de réalisation de l'invention, en cours de fabrication.

Comme tous les râteliers de stockage existants, le râtelier conforme à l'invention comprend une structure délimitant un certain nombre de logements 10 juxtaposés, dont chacun est prévu pour recevoir un assemblage de combustible nucléaire.

Plus précisément, les logements 10 sont prévus pour être orientés sensiblement verticalement et chacun d'entre eux présente une section sensiblement carrée dont les dimensions sont légèrement supérieures à celles de l'assemblage qu'il est destiné à recevoir. Les logements 10 sont fermés à leur extrémité inférieure et ouverts à leur extrémité supérieure pour permettre le chargement et le déchargement des assemblages.

En vue de dessus, les logements 10 sont disposés selon un réseau à pas carré, le pas de ce réseau étant égal au côté du carré formé en section par chacun des logements.

La structure du râtelier forme un parallélépipède rectangle dont la hauteur est adaptée à celle des assemblages que l'on désire y stocker. Les dimensions des côtés de ce parallélépipède, selon un plan horizontal, dépendent du nombre d'assemblages susceptibles d'être reçus dans le râtelier. Plus précisément, aux épaisseurs des tôles près, les dimensions de ces côtés sont des multiples du pas du réseau formé par les logements 10.

Conformément à l'invention, la structure du râtelier comprend un certain nombre de tôles principales 12 planes et en forme de rectangle. Ces tôles principales 12 présentent toutes des dimensions identiques et elles sont disposées parallèlement les unes aux autres, selon le pas constant du réseau formé par les logements 10. Les côtés du rectangle formé par chacune des tôles principales 12 sont égaux respectivement à la hauteur et à l'un des côtés du parallélépipède rectangle formé par la structure du râtelier.

La structure du râtelier comprend en outre des tôles entretoises 14, planes et en forme de rectangle allongé. Ces tôles entretoises 14 sont toutes identiques. Elles sont fixées par rangées entre les tôles principale 12 voisines, parallèlement les unes aux autres, selon un écartement égal au pas constant qui sépare les tôles principales 12. En outre, les tôles entretoises 14 sont orientées perpendiculairement aux tôles principales 12 et elles sont alignées de part et d'autre de celles-ci, comme l'illustre la figure 1, pour former les logements 10.

Le grand côté du rectangle formé par chacune des tôles entretoises 14 est égal à la hauteur du parallélépipède rectangle formé par la structure du râtelier. Le petit côté de ce rectangle est égal au pas constant qui sépare les tôles principales 12 et les tôles entretoises 14, à l'épaisseur des tôles près.

La structure du râtelier de stockage conforme à l'invention comprend également deux tôles de fermeture 16, dont une seule est représentée sur la figure 1. Ces tôles de fermeture 16 sont des tôles planes, de forme rectangulaire et de mêmes dimensions, dont les côtés correspondent respectivement à la hauteur et au deuxième côté du parallélépipède rectangle formé par la structure du râtelier. Les tôles de fermeture 16 sont fixées aux bords verticaux des tôles principales 16, parallèlement aux tôles entretoises 14 et de part et d'autre de celles-ci, de façon à être espacées du pas constant précité par rapport aux tôles entretoises 14 les plus proches.

La structure du râtelier est complétée par une plaque de base 18 qui ferme les logements 10 à leur extrémité inférieure. La plaque de base 18 est une plaque plane, de forme rectangulaire, dont les côtés correspondent aux côtés du parallélépipède rectangle formé par la structure du râtelier. La plaque de base 18 est fixée aux bords inférieurs d'au moins certaines des tôles principales 12, des tôles entretoises 14 et des tôles de fermeture 16, perpendiculairement à ces tôles.

Comme on l'a illustré sur la figure 1, chacune des tôles principales 12 comporte des séries d'encoches alignées 20, pratiquées parallèlement à leurs bords verticaux fixés sur les plaques de fermeture 16 sur chaque tôle principale 12. Les séries d'encoches 20 sont écartées les unes des autres selon ledit pas constant, de façon à se trouver en face de chacune des tôles entretoises 14 adjacentes.

Les encoches 20 sont toutes identiques et présentent la forme d'un rectangle allongé, dont le petit côté, orienté horizontalement, présente une dimension très légèrement supérieure à l'épaisseur des tôles entretoises 14.

Par ailleurs, les tôles entretoises 14 comportent des paires de dents 22a et 22b, qui font saillie sur leurs bords les plus longs, orientés verticalement. Lors de l'assemblage, chaque paire de dents 22a et 22b vient s'emboîter dans une encoche 20, de façon à assurer un positionnement relatif entre les tôles entretoises 14 et les tôles principales 12, à la fois selon une direction verticale et selon une direction horizontale, perpendiculaire aux tôles entretoises 14.

De façon plus précise, dans chacune des paires de dents 22a, le bord inférieur de la dent la plus basse est écarté du bord supérieur de la dent la plus haute d'une distance très légèrement inférieure à la dimension du grand côté, orienté verticalement, du rectangle formé par chacune des encoches 20.

Par ailleurs, dans chacune des paires de dents 22b, le bord inférieur de la dent la plus basse et le bord supérieur de la dent la plus haute sont écartés d'une distance très légèrement inférieure à l'écartement entre les deux dents de chacune des paires de dents 22a.

En outre, les encoches 20 d'une même série, les paires de dents 22a et les paires de dents 22b sont toutes régulièrement réparties selon un même pas.

Par conséquent, une même encoche 20 reçoit une paire de dents 22a de l'une des deux tôles entretoises 14 adjacentes, qui viennent s'emboîter dans les extrémités de cette encoche et une paire de dents 22b de l'autre tôle entretoise 14 adjacente, qui viennent s'emboîter entre les deux premières dents 22a.

Comme on l'a également montré sur la figure 1, les tôles de fermeture 16 sont positionnées par rapport aux tôles principales 12, à la fois selon une direction verticale et selon une direction horizontale perpendiculaire aux tôles principales. A cet effet, les bords verticaux des tôles principales 12 comportent des languettes 26 qui s'emboîtent dans des rangées de fentes 24 formées dans les tôles de fermeture 16.

Plus précisément, des rangées de fentes alignées 24 traversent les tôles de fermeture 16, parallèlement aux bords verticaux de ces tôles, les rangées de fentes 24 étant séparées les unes des autres selon un écartement qui correspond au pas constant précité. Les fentes 24 ont toutes la forme d'un rectangle allongé dont la largeur est très légèrement supérieure à l'épaisseur des tôles principales 12 et dont la longueur est très légèrement supérieure à la hauteur d'une languette 26, dans le sens vertical.

De plus, les fentes 24 d'une même rangée et les languettes 26 sont toutes régulièrement réparties selon un même pas.

Par conséquent, les languettes 26 s'emboîtent dans les fentes 24 avec un jeu réduit, assurant ainsi le positionnement relatif désiré entre les tôles 12 et 16.

L'agencement qui vient d'être décrit permet de fabriquer le râtelier de façon particulièrement simple, peu coûteuse et en garantissant, avec une bonne approximation, l'identité de forme et de dimensions des logements 10.

Dans un premier temps, on place sur un outillage (non représenté) une première tôle principale 12(1), une première tôle de fermeture 16(1) ainsi que la plaque de base 18, de façon telle qu'elles forment entre elles trois plans perpendiculaires servant de référence pour la suite de l'assemblage. Ces tôles 12(1) et 16(1) ainsi que la plaque de base 18 sont fixées les unes aux autres, de préférence par soudure. Il est à noter que les bords attenants des tôles 12 (1) et 16(1) et de la plaque 18 peuvent être positionnés les uns par rapport aux autres au moyen de pattes reçues dans des entailles, comme l'illustre la figure 1.

Au cours d'une deuxième étape du procédé de fabrication, on positionne et on fixe à tour de rôle une première rangée de tôles entretoises 14(1) sur la première tôle principale 12(1). Le positionnement de chacune des tôles entretoises 14(1) est assuré en introduisant les dents 22a dont l'écartement est le plus grand dans les encoches 20 pratiquées dans la première tôle principale 12(1), de façon telle que les tôles entretoises soient orientées parallèlement à la tôle de fermeture 16(1) et perpendiculairement à la tôle principale 12(1).

De façon plus précise, chacune des tôles entretoises 14(1) de la première rangée est positionnée et fixée à tour de rôle, en partant de la tôle entretoise 14(1) la plus proche de la première tôle de fermeture 16(1). La fixation est réalisée, de préférence par soudure.

On dispose ensuite une deuxième tôle principale 12(2) parallèlement à la première, en emboîtant les languettes 26 formées sur les bords verticaux de cette deuxième tôle principale dans la première rangée de fentes 24 de la tôle de fermeture 16(1) et en emboîtant les dents 22b formées sur les bords verticaux apparents des tôles entretoises 14(1) dans les encoches 20 pratiquées dans la deuxième tôle principale 12(2). La fixation de la deuxième tôle principale 12(2) sur les tôles entretoises 14(1) de la première rangée et sur la première tôle de fermeture 16(1) est ensuite assurée, de préférence par soudure.

Les deux opérations précédentes sont répétées, de proche en proche, afin de former successivement autant de rangées de logements 10 qu'on le désire. On monte ainsi successivement toutes les tôles entretoises 14 et toutes les tôles principales 12, en les soudant de proche en proche sur les tôles mises en place précédemment.

Enfin, on positionne et on fixe la deuxième tôle de fermeture 16 (non représentée) sur les bords verticaux restant apparents des tôles principales 12. A cet effet, on emboîte les languettes 26 des tôles principales 12 dans les fentes 24 pratiquées dans la deuxième tôle de fermeture 16. La fixation est ensuite assurée par soudure.

Lors de chacune des étapes qui viennent d'être décrites, au moins certaines des tôles mises en place sont également soudées par leur bord inférieur sur la plaque de base 18, au fur et à mesure de leur montage.

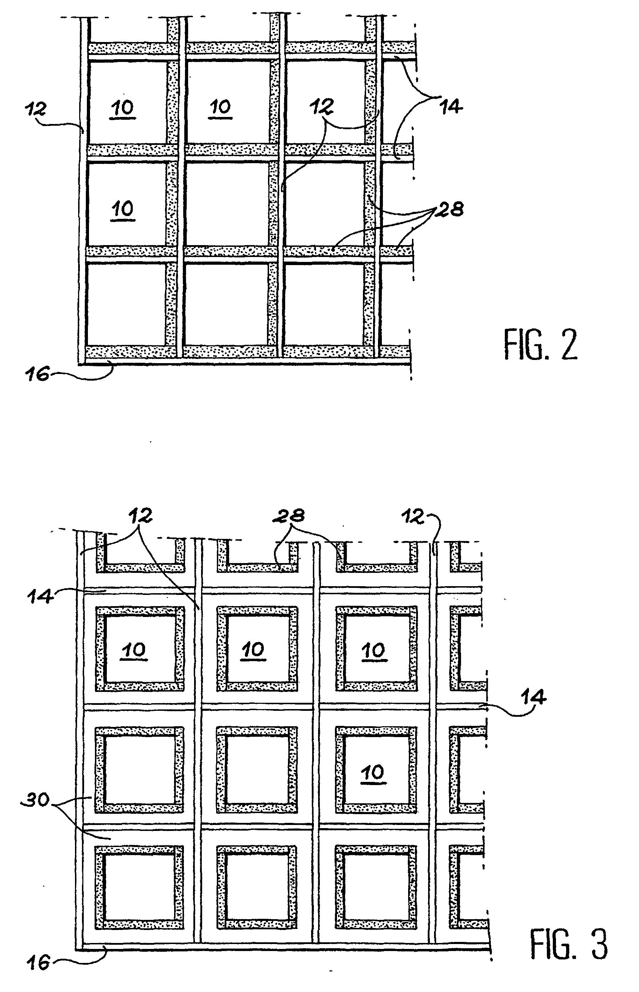

Comme l'illustre schématiquement la figure 2, au moins deux plaques planes 28 en un matériau neutrophage sont généralement placées dans chacun des logements 10 de la structure du râtelier. Plus précisément, dans chacun des logements 10, l'une des plaques 28 est appliquée contre l'une des tôles principales 12 qui le délimite et l'autre plaque 28 est appliquée contre l'une des tôles entretoises 14 qui le délimite. En outre, l'agencement des deux plaques 28 dans chacun des logements 10 est réalisé de la même manière, afin qu'une plaque 28 de matériau neutrophage sépare chaque paire de logements 10 voisins de la structure.

Les deux plaques 28 de matériau neutrophage qui sont placées dans chacun des logements 10 coopèrent de préférence entre elles par des bords adjacents crénelés (non représentés), afin d'être immobilisées l'une par rapport à l'autre. En outre, les autres bords verticaux des plaques 28 comportent des dents (non représentées) encastrées dans des logements prévus à cet effet dans les tôles correspondantes de la structure. Cet agencement assure une immobilisation complète des plaques 28 dans chacun des logements 10.

Les plaques 28 en matériau neutrophage sont montées le long des tôles 12 et 14 au fur et à mesure de leur assemblage.

L'agencement qui vient d'être décrit en se référant à la figure 2 permet le stockage d'assemblages de combustible nucléaire usagés, de faible réactivité.

Lorsque les assemblages de combustible nucléaire sont neufs ou faiblement usagés, c'est-à-dire lorsqu'ils présentent une réactivité élevée, on adopte de préférence l'agencement illustré sur la figure 3.

Dans ce cas, quatre plaques 28 de matériau neutrophage sont reçues dans chacun des logements 10, à proximité de chacune des tôles principales 12 et des tôles entretoises 14 délimitant ce logement. De préférence, les quatre plaques 28 de matériau neutrophage reçues dans chacun des logements 10 sont alors reliées les unes aux autres par des systèmes de maintien 30 encerclant chaque groupe de quatre plaques. Plus précisément, au moins deux systèmes de maintien 30 encerclent les quatre plaque 28 reçues dans un logement 10 donné, à au moins deux niveaux différents.

Les systèmes de maintien 30 des plaques 28 peuvent être réalisés avantageusement de la manière décrite dans le document EP-A-0 858 079. Ainsi, ces systèmes de maintien 30 peuvent notamment comprendre des cadres rigides formant un carré en vue de dessus et encerclant les groupes de quatre plaques 28 de façon à les maintenir en place comme l'illustre la figure 3. Les cadre rigides 30 peuvent par exemple être immobilisés sur les plaques planes 28, selon une direction verticale, par des encoches (non représentées) pratiquées dans ces plaques.

Dans la forme de réalisation de la figure 3, la présence des systèmes de maintien 30 entre les plaques 28 de matériau neutrophage et les tôles 12 et 14 permet de garantir la présence d'une lame d'eau entre 'les assemblages adjacents.

Les plaques 28 de matériau neutrophage peuvent également être maintenues d'une autre manière : calages rapportés, plis des tôles principales et des tôles entretoises, déformations locales de ces mêmes tôles, etc...

Les ensembles neutrophages constitués par les plaques planes 28 et par leurs systèmes de maintien associés sont généralement mis en place dans les logements 10 après l'assemblage de la structure constituée des tôles principales 12, des tôles entretoises 14, des tôles de fermeture 16 et de la plaque de base 18. Ils peuvent également être montés au fur et à mesure de la constitution du râtelier.

Il est à noter qu'il est possible de ne monter un ensemble neutrophage que dans un sur deux des logements 10, lorsque les assemblages que l'on désire stocker présentent une faible réactivité.

Par ailleurs, au lieu de recevoir deux dents 22a, 22b de chacune des tôles entretoises 14, une encoche 20 donnée peut recevoir une seule dent de chacune des tôles 14, ces dents étant alors placées l'une au-dessus de l'autre dans l'encoche. Enfin, les dents formées sur les tôles entretoises disposées de part et d'autre d'une même tôle principale 12 peuvent être reçues dans des encoches différentes, chaque encoche recevant alors une seule dent.

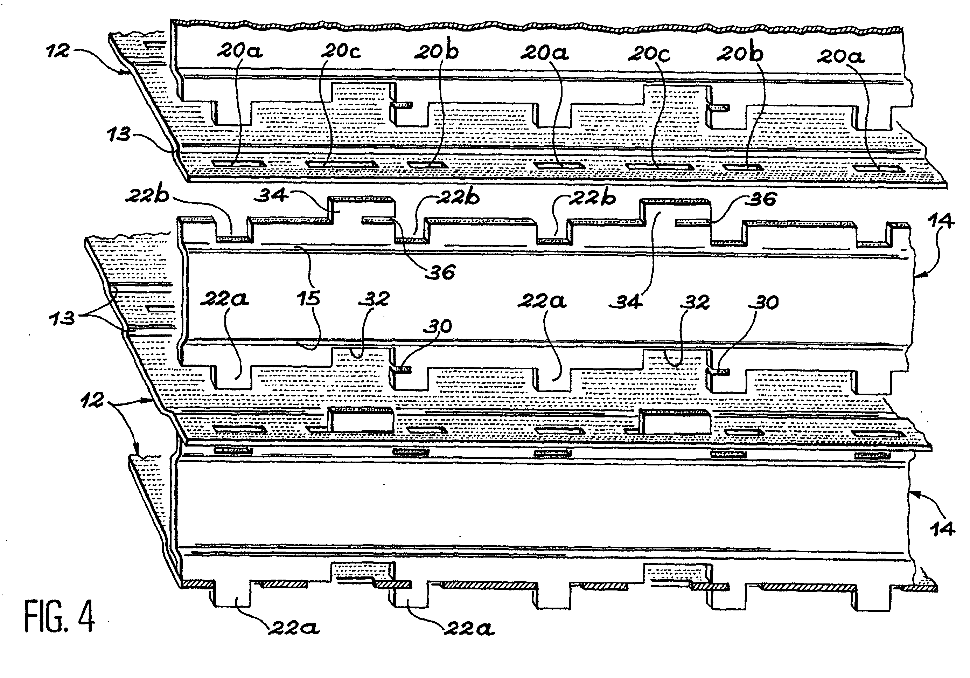

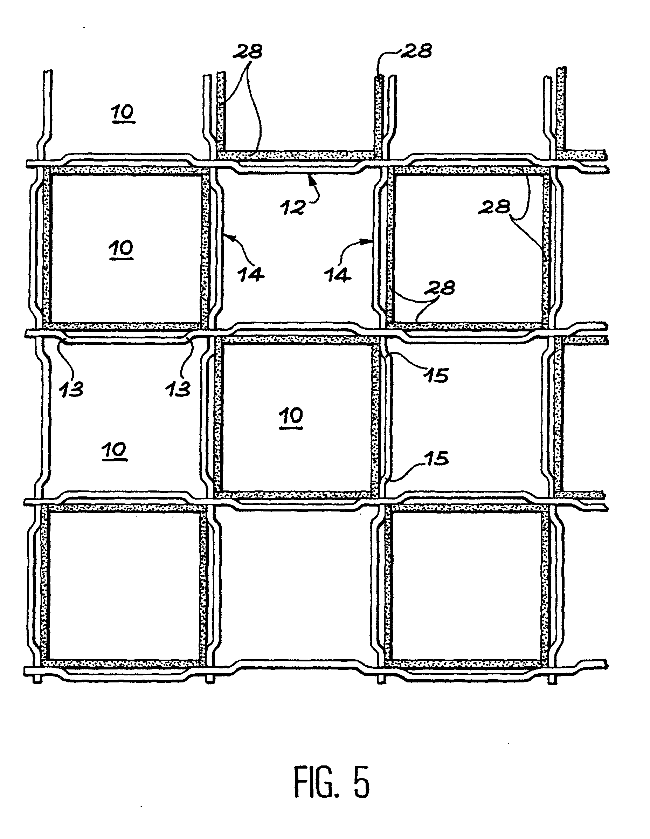

Dans une deuxième forme de réalisation de l'invention, qui va à présent être décrite en se référant aux figures 4 et 5, les liaisons entre les tôles principales 12 et les tôles entretoises 14 sont réalisées sans soudure, par emboîtements mécaniques.

Dans cette deuxième forme de réalisation, le râtelier est formé, comme précédemment, par l'assemblage de tôles principales 12, de tôles entretoises 14, de fonds de logements (non représentés) et d'une plaque de base (non représentée). De plus, des ensembles neutrophages amovibles analogues à ceux qui ont été décrits précédemment et comprenant chacun quatre plaques 28 de matériau neutrophage (figure 5), sont placés dans un logement 10 sur deux, selon un agencement en quinconce.

Les tôles principales 12 et les tôles entretoises 14 comportent, dans ce cas, des séries de plis rectilignes 13 et 15, parallèles à leurs grands côtés, de façon à être orientés dans le sens de la hauteur lorsque le râtelier est terminé. Ces plis 13 et 15 sont réalisés de façon telle que les sections de tous les logements 10 soient sensiblement identiques, après qu'un ensemble neutrophage ait été placé dans un sur deux des logements.

Pour permettre l'assemblage des tôles 12 et 14, des séries d'encoches alignées sont découpées dans les tôles principales 12, parallèlement à leurs grands côtés, en respectant un espacement égal au pas des logements 10. Chaque série d'encoches est formée de trois types d'encoches 20a, 20b et 20c.

Les encoches 20a sont des encoches rectangulaires régulièrement espacées. Certaines de ces encoches 20a, désignées par la référence 20b (une sur deux dans l'exemple illustré sur la figure 4), ont une longueur réduite. Les encoches 20c sont des encoches rectangulaires identiques, placées au-dessus des encoches 20b.

Par ailleurs, chacun des grands côtés des tôles entretoises 14 est crénelé selon un profil conjugué ou complémentaire, de telle sorte que les bords en vis-à-vis de deux tôles entretoises 14 placées de part et d'autre d'une tôle principale 12 s'emboîtent précisément l'un dans l'autre, au travers des encoches 20a, 20b et 20c d'une même rangée.

De façon plus précise, l'un des grands côtés de chaque tôle entretoise 14 comporte des dents rectangulaires 22a régulièrement espacées, alors que l'autre grand côté comporte des créneaux rectangulaires 22b situés au même niveau et dont les dimensions sont identiques. Les dents 22a sont placées en concordance avec les encoches 20a et 20b découpées dans les tôles principales 12.

Certaines des dents 22a (par exemple une sur deux, comme l'illustre la figure 4) présentent une rainure 30, ouverte par exemple vers le haut, le long du grand côté correspondant de la tôle entretoise 14. Les dents 22a comportant une rainure 30 sont placées en face des encoches 20b et les dents 22a dépourvues de rainure sont placées en face des encoches 20a. La longueur de chacune des encoches 20a est égale à la hauteur d'une dent 22a (mesurée parallèlement aux grands côtés de la tôle entretoise), augmentée de la longueur de la rainure 30, et la longueur de chacune des encoches 20b est égale à la hauteur d'une dent 22a.

Au-dessus de chacune des dents 22a comportant une rainure 30, une entaille rectangulaire 32 est découpée dans le grand côté correspondant de la tôle entretoise 14. L'autre grand côté de cette tôle 14 comporte, au niveau de chacune des entailles 32, une saillie rectangulaire 34 de mêmes dimensions que cette encoche. La hauteur de chacune des saillies 34 et entailles 32 (mesurée parallèlement aux grands côtés de la tôle entretoise 14) est égale à la longueur de chacune des encoches 20c, et leur écartement est le même.

Une deuxième rainure 36, ouverte dans ce cas vers le bas, est usinée dans chaque saillie 34, le long du grand côté correspondant de la tôle entretoise 14. La longueur de chacune des rainures 36 est sensiblement double de celle des rainures 30.

Ainsi, lorsque les bords en vis-à-vis de deux tôles entretoises sont emboîtées, les rainures 30 et 36 sont groupées deux à deux dans le prolongement l'une de l'autre, pour se comporter comme des encoches fermées alignées dans lesquelles sont emprisonnées certaines parties des tôles principales 12 situées entre deux encoches 20b et 20c consécutives.

L'assemblage des tôles 12 et 14 va à présent être décrit, en référence à la figure 4.

Une première tôle principale 12 est posée sur un outillage support horizontal (non représenté).

Une première rangée de tôles entretoises 14 est alors mise en place, en engageant les dents 22a dans les encoches 20a et 20b. Le parallélisme entre les tôles 14 est assuré par un outillage approprié (non représenté). Les dents 22a dépourvues de rainure sont alors dans le bas des encoches 20a et les dents 22a munies de rainures 30 au niveau des encoches 20b. Le verrouillage est assuré en déplaçant les tôles 14 vers la gauche sur la figure 4.

Une deuxième tôle principale 12 est ensuite placée sur la première rangée de tôles entretoises 14, en engageant les saillies 34 dans les encoches 20c. On déplace ensuite la deuxième tôle principale 12 vers la gauche sur la figure 4, pour amener le fond des rainures 36 en butée contre le bord droit des encoches 20c. Le bord droit des saillies 34 affleure alors le bord gauche des encoches 22b.

On met ensuite en place, comme décrit précédemment, une deuxième rangée de tôles entretoises 14. Chacune de ces tôles 14 est alors déplacée vers la gauche sur la figure 4, de façon à amener le fond des rainures 30 en butée contre le bord gauche des encoches 20b. Lors de ce mouvement, la deuxième tôle principale 12 est également repoussée vers la droite sur la moitié de la longueur des rainures 36. A la fin du mouvement, la tôle principale 12 est donc en prise simultanément avec les rainures 30 et 36 et les deux rangées de plaques entretoises sont verrouillées entre elles.

Dans les logements qui ne sont pas destinés à recevoir des ensembles neutrophages, on monte des fonds (non représentés) qui viennent s'encliqueter dans les quatre tôles définissant ce logement, et assurent le verrouillage de la rangée de tôles considérée.

On renouvelle les opérations qui précèdent autant de fois que nécessaire, jusqu'à l'obtention de la taille désirée pour le râtelier.

Enfin, on boulonne la plaque de base (non représentée) sur les fonds, pour terminer l'assemblage.

On peut alors mettre en place les ensembles neutrophages, comme l'illustre la figure 5.

## Revendications

1. Râtelier de stockage d'assemblages de combustible nucléaire, comprenant une structure délimitant des logements (10) juxtaposés, de section sensiblement carrée, agencés selon un réseau régulier, ladite structure comportant :
- des tôles principales (12), disposées parallèlement les unes aux autres selon un pas constant,
- des tôles entretoises (14) fixées entre les tôles principales (12) voisines et parallèlement les unes aux autres selon ledit pas constant, de façon à être perpendiculaires aux tôles principales et alignées de part et d'autre de celles-ci,
- une plaque de base (18) fixée au moins à certaines des tôles principales (12) et des tôles entretoises (14), perpendiculairement à ces tôles et
des dents (22a) et des saillies (34), respectivement formées sur les deux bords opposés, de plus grande longueur, des tôles entretoises (14), qui sont reçues dans des encoches (20b,20c) découpées dans les tôles principales (12) et sont pourvues de rainures (30,36) aptes à emprisonner certaines parties des tôles principales (12) situées entre deux encoches (20b,20c) consécutives, de telle sorte que les tôles principales (12) et les tôles entretoises (14) sont fixées les unes aux autres par emboîtements mécaniques.

2. Râtelier selon la revendication 1, dans lequel la structure comprend de plus deux tôles de fermeture (16) fixées aux tôles principales (12) parallèlement aux tôles entretoises (14) et de part et d'autre de celles-ci, selon ledit pas constant.

3. Râtelier selon la revendication 2, dans lequel des languettes (26) formées sur deux bords opposés, parallèles aux tôles entretoises (14), des tôles principales (12), sont reçues dans des fentes (24) découpées dans les tôles de fermeture (16).

4. Râtelier selon l'une quelconque des revendications 2 et 3, dans lequel les tôles principales (12), les tôles entretoises (14), les tôles de fermeture (16) et la plaque de base (18) sont sensiblement planes.

5. Râtelier selon l'une quelconque des revendications précédentes, dans lequel la structure formant un parallélépipède rectangle de hauteur et de côtés donnés, chacune des tôles principales (12) a la forme d'un rectangle dont les dimensions sont la hauteur et l'un des côtés, chacune des tôles entretoises (14) a la forme d'un rectangle dont les dimensions sont la hauteur et ledit pas, et la plaque de base (18) a la forme d'un rectangle dont les dimensions sont lesdits côtés.

6. Râtelier selon l'une quelconque des revendications précédentes, dans lequel au moins deux plaques (28) d'un matériau neutrophage sont placées dans chacun des logements (10) de la structure, parallèlement à une tôle principale (12) et à une tôle entretoise (14), de telle sorte qu'au moins une plaque (28) de matériau neutrophage sépare chaque paire de logements voisins de la structure.

7. Râtelier selon la revendication 6, dans lequel quatre plaques (28) de matériau neutrophage sont placées dans au moins certains des logements (10).

8. Râtelier selon la revendication 7, dans lequel les quatre plaques (28) de matériau neutrophage reçues dans un même logement (10) sont reliées les unes aux autres par des systèmes de maintien (30), de façon à former des ensembles neutrophages amovibles.

9. Râtelier selon la revendication 8, dans lequel les tôles principales (12) et les tôles entretoises (14) comportent des plis rectilignes (13,15), dans le sens de la hauteur de la structure, de telle sorte que les sections de tous les logements (10) soient sensiblement identiques lorsqu'un ensemble neutrophage amovible est placé dans un logement (10) sur deux.

10. Râtelier selon l'une quelconque des revendications 1 à 5, dans lequel moins de deux plaques de matériau neutrophage sont placées dans chacun des logements (10).

11. Procédé de fabrication d'un râtelier de stockage, dans lequel :
- on dispose sur un outillage une première tôle principale (12),
- on positionne et on fixe à tour de rôle une première rangée de tôles entretoises (14) sur la première tôle principale (12),
- on dispose une deuxième tôle principale (12) parallèlement à la première et on la fixe sur la première rangée de tôles entretoises (14), et
- on répète les deux opérations précédentes afin de monter toutes les tôles entretoises (14) et toutes les tôles principales (12),
les fixations des tôles principales (12) et des entretoises (14) étant réalisées par emboîtements mécaniques, en emprisonnant certaines parties des tôles principales (12), situées entre des encoches consécutives (20b,20c) formées dans celles-ci, dans des rainures (30,36) prévues dans des dents (22a) et des saillies (34), respectivement formées sur deux bords opposés, de plus grande longueur, des tôles entretoises (14).

## Claims

1. A storage rack for nuclear fuel assemblies, comprising a structure delimiting juxtaposed housings (10), with a substantially square section, according to a regularly distributed system, said structure comprising:
- main plates (12) disposed parallel to one another according to a constant spacing,
- spacer plates (14) secured between adjacent main plates (12) and parallel to one another according to said constant spacing, so as to be perpendicular to the main plates and aligned on both sides of the latter, and
- a base plate (18) secured to at least some of the main plates (12) and spacer plates (14), perpendicular to these plates,
and teeth (22a) and protrusions (34) formed respectively on two opposite, longest edges of the spacer plates (14), which are received in notches (20b, 20c) cut in the main plates (12) and are provided with grooves (30, 36) suited to trap certain parts of the main plates (12) located between two consecutive notches (20b, 20c), in such a manner that the main plates (12) and the spacer plates (14) are secured to one another through mechanical nesting.

2. A rack according to claim 1, wherein the structure further comprises two end plates (16) secured to the main plates (12) parallel to the spacer plates (14) and on both sides of the latter, according to said constant spacing.

3. A rack according to claim 2, wherein tabs (26) formed on two opposite edges, parallel to the spacer plates (14), of the main plates (12), are received in slots (24) cut in the end plates (16).

4. A rack according to one of claims 2 and 3, wherein the main plates (12), the spacer plates (14), the end plates (16) and the base plate (18) are substantially flat.

5. A rack according to any of the prior claims, wherein the structure forms a rectangular parallelepiped with a given height and sides, each of the main plates (12) has the shape of a rectangle whose dimensions are the height and one of the sides of the parallelepiped, each of the spacer plates (14) has the shape of a rectangle whose dimensions are the height and said spacing, and the base plate (18) has the shape of a rectangle whose dimensions are said sides.

6. A rack according to any of the prior claims, wherein at least two plates (28) made of a neutrophagus material are placed in each of the housings (10) of the structure, parallel to a main plate (12) and to a spacer plate (14), in such a manner that at least one plate (28) of neutrophagus material separates each pair of adjacent housings of the structure.

7. A rack according to claim 6, wherein four plates (28) of neutrophagus material are placed in at least some of the housings (10).

8. A rack according to claim 7, wherein the four plates (28) of neutrophagus material received in a given housing (10) are connected together by retaining systems (30), so as to form removable neutrophagus assemblies.

9. A rack according to claim 8, wherein the main plates (12) and the spacer plates (14) comprise rectilinear welts (13, 15), in the direction of the height of the structure, such that the sections of all the housings (10) are substantially identical when a removable neutrophagus assembly is placed in every other housing (10).

10. A rack according to any of claims 1 to 5, wherein less than two plates of neutrophagus material are placed in each of the housings (10).

11. A manufacturing process for a storage rack, wherein:
- a first main plate (12) is disposed on a tooling,
- a first row of spacer plates (14) is positioned and secured in turns on the first main plate (12),
- a second main plate (12) is disposed parallel to the first main plate and secured to the first row of spacer plates (14), and
- the two prior operations are repeated so as to mount all the spacer plates (14) and all the main plates (12),
the main plates (12) and spacer plates (14) being secured through mechanical nesting, by trapping certain parts of the main plates (12), located between consecutive notches (20b, 20c) formed in the latter, in grooves (30, 36) provided in teeth (22a) and protrusions (34), formed respectively on two opposite, longest edges of the spacer plates (14).

## Patentansprüche

1. Lagergestell für nukleare Brennstabbündel mit einem Aufbau, der nebeneinander gelegene Aufnahmen (10) von im wesentlichen quadratischem Querschnitt, die in einem regelmäßigen Netz angeordnet sind, festlegt, wobei der Aufbau umfasst:
Hauptbleche (12), die parallel zueinander in gleichem Abstand angeordnet sind,
Zwischenbleche (14), die zwischen den benachbarten Hauptblechen (12) und parallel zueinander in dem gleichen Abstand so befestigt sind, dass sie zu den Hauptblechen senkrecht und auf beiden Seiten derselben ausgerichtet sind,
eine Grundplatte (18), die mindestens an bestimmten Hauptblechen (12) und an zu diesen Blechen senkrechten Zwischenblechen (14) befestigt ist, und
Zähne (22a) und Vorsprünge (34), die jeweils an den beiden entgegengesetzten längeren Kanten der Zwischenbleche (14) ausgebildet sind, und die in in die Zwischenbleche (12) geschnittenen Ausnehmungen (20b, 20c) aufgenommen sind und mit Nuten (30, 36) versehen sind, die bestimmte, zwischen zwei aufeinanderfolgenden Ausnehmungen (20b, 20c) gelegene Teile der Hauptbleche (12) so festhalten können, dass die Hauptbleche (12) und die Zwischenbleche (14) aneinander durch mechanische Verklammerungen befestigt sind.

2. Gestell nach Anspruch 1, wobei der Aufbau außerdem zwei an den Hauptblechen (12) parallel zu den Zwischenblechen (14) und auf beiden Seiten von diesen gemäß dem konstanten Abstand befestigte Abschlussbleche (16) umfasst.

3. Gestell nach Anspruch 2, wobei an zwei
entgegengesetzten, zu den Zwischenblechen (14) parallelen Rändern der Hauptbleche (12) ausgebildete Zungen bzw. Federn (26) in Schlitzen (24) aufgenommen sind, die in die Abschlussbleche (16) geschnitten sind.

4. Gestell nach einem der Ansprüche 2 und 3, wobei die Hauptbleche (12), die Zwischenbleche (14), die Abschlussbleche (16) und die Grundplatte (18) im wesentlichen eben sind.

5. Gestell nach einem der vorangehenden Ansprüche, wobei der Aufbau ein rechteckiges Parallelepiped gegebener Höhe und gegebener Seiten bildet, wobei jedes der Hauptbleche (12) die Form eines Rechtecks aufweist, dessen Abmessungen die Höhe und eine der Seiten sind, wobei jedes der Zwischenbleche (14) die Form eines Rechtecks aufweist, dessen Abmessungen die Höhe und der Abstand sind, und wobei die Grundplatte (18) die Form eines Rechtecks aufweist, dessen Abmessungen die Seiten sind.

6. Gestell nach einem der vorangehenden Ansprüche, wobei mindestens zwei Platten (28) aus einem neutrophagen Material in jeder der Aufnahmen (10) des Aufbaus parallel zu einem Hauptblech (12) und einem Zwischenblech (14) derart angeordnet sind, dass mindestens eine Plätte (28) aus Neutronen fressendem Material jedes Paars von benachbarten Aufnahmen des Aufbaus trennt.

7. Gestell nach Anspruch 6, wobei vier Platten (28) aus neutrophagem Material zumindest in bestimmten Aufnahmen (10) angeordnet sind.

8. Gestell nach Anspruch 7, wobei die vier Platten (28) aus neutrophagem Material, die in ein und derselben Aufnahme (10) aufgenommen sind, miteinander durch Halterungssysteme (30) so verbunden sind, dass sie entfernbare bzw. herausnehmbare neutrophage Einheiten bilden.

9. Gestell nach Anspruch 8, wobei die Hauptbleche (12) und die Zwischenbleche (14) geradlinige Faltungen (13, 15) in Richtung der Höhe des Aufbaus umfassen, und zwar derart, dass die Abschnitte aller Aufnahmen (10) im wesentlichen identisch sind, wenn eine entfernbare neutrophage Einheit in eine von zwei Aufnahmen (10) eingebracht wird.

10. Gestell nach einem der Ansprüche 1 bis 5, wobei weniger als zwei Platten neutrophagen Materials in jede der Aufnahmen (10) eingebracht sind.

11. Verfahren zur Herstellung eines Lagergestells, wobei:
auf einer Werkzeugeinrichtung ein erstes Hauptblech (12) angeordnet wird,
nacheinander eine erste Reihe von Zwischenblechen (14) auf dem ersten Hauptblech (12) positioniert und befestigt wird,
ein zweites Hauptblech (12) parallel zum ersten angeordnet und an der ersten Reihe von Zwischenblechen (14) befestigt wird, und
die beiden vorausgehenden Arbeitsgänge wiederholt werden, um alle Zwischenbleche (14) und alle Hauptbleche (12) anzubringen,
wobei die Befestigungen der Hauptbleche (12) und der Zwischenbleche (14) durch mechanische Verklammerungen bewerkstelligt werden, indem bestimmte Teile der Hauptbleche (12), die zwischen in diesen ausgebildeten, aufeinanderfolgenden Ausschnitten (20b,20c) gelegen sind, in Nuten (30,36) gehalten werden, die in Zähnen (22a) und Vorsprüngen (34) vorgesehen sind, die jeweils an zwei entgegengesetzten längeren Rändern der Zwischenbleche (14) ausgebildet sind.
